# EUROPÄISCHE PATENTSCHRIFT

(11) **EP 1 899 045 B1**
(45) Veröffentlichungstag und Bekanntmachung des Hinweises auf die Patenterteilung: **29.07.2009**
(21) Anmeldenummer: 06754414.8
(22) Anmeldetag: 16.06.2006
(51) Int. Cl.: B01F 13/00, B01F 9/08, B01F 3/12, B01F 3/18, B09C 1/08, B09C 1/10, B09B 3/00

(54) **AUFBEREITUNGSEINRICHTUNG FÜR KONTAMINIERTE MATERIALIEN**
PROCESSING DEVICE FOR CONTAMINATED MATERIALS
DISPOSITIF DE TRAITEMENT DE MATIERES CONTAMINEES

(30) Priorität: 23.06.2005 DE 102005029561
(43) Veröffentlichungstag der Anmeldung: 19.03.2008
(73) Patentinhaber: Schenk, Jürgen Hans, 70188 Stuttgart (DE)
(72) Erfinder: Schenk, Jürgen Hans, 70188 Stuttgart (DE)
(74) Vertreter: Rüger, Barthelt & Abel Patentanwälte
(86) Internationale Anmeldenummer: PCT/EP2006/005813
(87) Internationale Veröffentlichungsnummer: WO 2006/136342

(56) Entgegenhaltungen:
- US-A- 4 487 507
- US-A- 4 882 021
- US-A- 4 913 586
- US-A- 5 200 033
- US-A- 5 232 584
- ANDREONI V ET AL: "Bacterial communities and enzyme activities of PAHs polluted soils" CHEMOSPHERE, PERGAMON PRESS, OXFORD, GB, Bd. 57, Nr. 5, November 2004 (2004-11), Seiten 401-412, XP004544270 ISSN: 0045-6535
- DAGHER F ET AL: "COMPARATIVE STUDY OF FIVE POLYCYCLIC AROMATIC HYDROCARBON DEGRADING BACTERIAL STRAINS ISOLATED FROM CONTAMINATED SOILS" CANADIAN J. OF MICROBIOLOGY, OTTAWA, CA, Bd. 43, Nr. 4, 1997, Seiten 368-377, XP009052823 ISSN: 0008-4166

## Beschreibung

Die Erfindung betrifft eine Aufbereitungseinrichtung für Material und sonstige kontaminierte Materialien.

Bei Bauvorhaben oder auch sonstigen Gelegenheiten werden immer wieder Materialien angetroffen, die einer spezifischen Behandlung bedürfen. Beispielsweise können Böden mit PCB, anderen polychlorierten Kohlenwasserstoffen, Säuren, Laugen oder sonstigen Chemikalien kontaminiert sein. Zur Entgiftung solcher Böden, müssen häufig Zuschlagstoffe in den Boden eingearbeitet werden. Hierbei kann es sich um Chemikalien handeln, die die vorhandenen Bodenschadstoffe z.B. neutralisieren oder wenigstens immobilisieren. Gelegentlich sind auch Bakterienkulturen in den Boden einzuarbeiten, die dann bspw. Kohlenwasserstoffe abbauen. In allen genannten Fällen werden die Zuschlagstoffe in eher geringen Mengen eingearbeitet, wobei sie jedoch gleichmäßig und in der Regel besonders fein verteilt eingearbeitet werden müssen. Ist dieses Material bspw. lehmig, bindig, müssen die einzelnen Krumen nicht nur von den Zuschlagstoffen umhüllt, sondern von den Zuschlagstoffen durchsetzt werden. Selbst bei wenig bindigen Materialien, zeigt sich, dass eine sehr intensive Durchmischung des Mischgutes und Zuschlagstoff erforderlich ist, die pro Charge mit einem gewöhnlichen Fallmischer z.B. etwa 15 Minuten in Anspruch nehmen kann. Diese Mischzeiten sind inakzeptabel lang.

Aus der US-A-5232584 ist eine Mischeinrichtung mit einem Behälter bekannt, in dem ein Rührwerk angeordnet ist. An dem Boden des im Wesentlichen zylindrischen Behälters ist eine Auslassöffnung ausgebildet, über die kontrolliert Mischgut entnommen werden kann. Die Einrichtung dient der Aufbereitung verschiedener fester oder flüssiger Abfälle.

Davon ausgehend, ist es Aufgabe der Erfindung, eine Aufbereitungseinrichtung zu schaffen, mit der die erforderlichen Aufbereitungsvorgänge in deutlich reduzierter Zeit durchgeführt werden können.

Diese Aufgabe wird mit einer Aufbereitungseinrichtung gemäß Anspruch 1, 2 oder 3 gelöst.

Die erfindungsgemäße Mischeinrichtung weist einen Mischtrog auf, der um eine zur Vertikalen geneigte oder senkrechte Drehachse drehbar gelagert und vorzugsweise durch eine entsprechende Trog-Antriebseinrichtung drehend angetrieben ist. In dem Mischtrog ist mindestens eine Rühreinrichtung angeordnet, die mit ihrer eigenen Antriebseinrichtung versehen ist. Solche Mischeinrichtungen gestatten eine weite Einstellung verschiedener Parameter, bspw. durch Wahl der Drehzahlen von Mischtrog und Rühreinrichtung, sowie durch Wahl gleichsinniger oder gegensinniger Drehrichtungen. Eine an dem Behälterboden vorgesehene Materialauslassöffnung ist z.B. etwa zentrisch angeordnet und gibt einen Strom aufbereiteten Materials entweder fortwährend oder von Zeit zu Zeit ab. Die Materialauslassöffnung kann über geeignete Klappen oder Schieber gesperrt oder freigegeben werden. Diese Einrichtung sitzt auf einem Fahrgestell (Rad, Kette, Schiene oder Ähnliches), mit dem.sie an unterschiedliche Einsatzorte verbracht werden kann. Dies hat den Vorzug, dass aufwendige, zeitraubende, kostspielige und umweltschädliche Transportvorgänge der Materialien zu einem Aufbereitungswerk und zurück entfallen können. Andererseits bedingt dies, dass die Aufbereitungseinrichtung gewisse vorgegebene Außenabmessungen, wie bspw. maximal ca. 4m Höhe oder z.B. maximale 2,50 m Breite, nicht übersteigen darf. Ansonsten ist ein kostengünstiger und kurzfristiger Straßentransport und Mischereinsatz kaum noch möglich. Die Aufbereitungseinrichtung muss deshalb sehr kompakt bauen. Dies wird erreicht, indem in dem Grundrahmen unterhalb der Materialauslassöffnung des Mischtroges eine Materialdurchlassöffnung angeordnet wird, durch die das aufbereitete Material in einem Bereich unter dem Grundrahmen abgegeben wird. Hier kann das Material dann mit einer geeigneten Fördereinrichtung, wie bspw. einer Bandfördereinrichtung, abtransportiert werden. Die kompakte Bauweise ermöglicht, dass der Straßentransport ohne sonst erforderliche Ausnahmegenehmigung erfolgen kann. Das Zugfahrzeug kann ein handelsübliches KFZ sein.

Um den Freiraum zwischen dem Grundgestell und dem Boden zu erhöhen, ist es möglich, geeignete Hebeeinrichtungen vorzusehen, mit denen das Grundgestell angehoben wird. Solche Hebeeinrichtungen können bspw. hydraulische Heber sein, die an dem Grundrahmen sitzen und sich an dem Boden abstützen.

Bei einer alternativen Ausführungsform sind die Hebeeinrichtungen zwischen dem Mischtrog und dem Grundrahmen wirksam. Der gemäß Anspruch 2 hier vorgesehene Zwischenraum kann ausreichend sein, um dort eine Fördereinrichtung, bspw. eine Bandfördereinrichtung einzuführen. Hydraulische Heber können diesen Zwischenraum, falls erforderlich, vergrößern.

Es ist des Weiteren möglich, den Mischtrog und die ihm zugeordneten Aggregate, wie Trog-Antriebseinrichtung, Rühreinrichtung und Rühr-Antriebseinrichtung und Wiegezellen auf einem Teilrahmen zu montieren, der mit dem Grundrahmen lösbar verbunden ist. Dieser Teilrahmen kann mit der Mischeinrichtung von dem Fahrgestell abgenommen und am Einsatzort auf ein gesondertes Gestell, gesonderte Fundamente oder ein sonstiges Lager aufgesetzt werden. Das aufbereitete Material wird wiederum durch eine Materialdurchlassöffnung nach unten abgegeben, die in dem Teilrahmen unterhalb der Materialauslassöffnung des Mischtrogs angeordnet ist. Wie bei allen vorbesprochenen Ausführungsformen auch, kann in der Materialdurchlassöffnung ein Fallschacht angeordnet sein, um das abgegebene Material auf die Fördereinrichtung zu leiten, die zum Materialabtransport vorgesehen ist.

Das Fahrgestell kann Teil eines Fahrzeugs, insbesondere eines Anhängerfahrzeugs sein. Dabei ist es möglich, weitere Einheiten, wie bspw. einen Steuerungscontainer, der zugleich Bürocontainer sein kann, sowie ein oder mehrere Speicher und Dosiereinrichtungen für Zuschlagstoffe auf dem Anhänger anzuordnen. Zwischen den Speichern und dem Mischtrog sind vorzugsweise Fördereinrichtungen vorgesehen, die auch als Dosiereinrichtung genutzt werden können.

Die Speichereinrichtungen und Dosiereinrichtungen eignen sich insbesondere zur Aufnahme und Dosierung von Adsorptionsmitteln wie Aktivkohle oder Ähnlichem insbesondere in granulierter, pelletierter oder staubiger oder körniger Form. Das Einmischen solcher Zuschlagstoffe und die feine Verteilung derselben in dem Mischgut erfolgt dann in dem Mischtrog insbesondere unter der Wirkung der Rühreinrichtung. Dabei kann der Prozess durch gezielte Vergrößerung oder Verringerung der Drehzahl der Rühreinrichtung sowie durch Wechsel von deren Drehrichtung eine vollständige Pulverisierung granulierter oder pelletierter Adsorptionsmittel Pellets mit einer homogenen Vermischung des aufzubereitenden Materials erreicht werden. Dabei ist es möglich, die Drehzahl und/oder die Drehrichtung der Rühreinrichtung konstant zu halten oder zu variieren. Außerdem ist, je nach Materialbeschaffenheit und sonstigen Randbedingungen, der chargenweise Materialdurchlauf oder auch der kontinuierliche Materialdurchlauf durch den Mischtrog möglich. Es zeigt sich, dass das gewünschte Mischergebnis bei chargenweisem Betrieb bereits nach weniger als einer Minute vorliegen kann, womit eine höchst effiziente Möglichkeit der Materialaufbereitung geschaffen ist. In einer bevorzugten Anwendungsform wird die erfindungsgemäße Mischeinrichtung mit Material beschickt, das vorort durch einen Kerbbrecher, einen Zweiwellenbrecher oder eine anderweitige Einrichtung erzeugt worden ist, die in der Lage ist, die grobstückige Komponente eines Materialgemischs bis zu einer gewünschten Korngröße zu zerkleinern, ohne dabei durch feinere Materialbestandteile gestört zu werden, die in dem Materialgemisch enthalten waren und sind. Solche Einrichtungen sind bspw. der DE 10 111 305 A1 sowie der WO 2004/101156 A1 zu entnehmen. Beide Einrichtungen, d.h. der Vorbrecher und die Mischeinrichtung, können als mobile Einrichtungen ausgebildet sein, um bedarfsweise an ihren Einsatzort verfrachtet zu werden. Bei Einsatz der genannten Brecheinrichtungen, insbesondere der Kerbbrecheinrichtungen, erübrigt sich in der Regel eine Vorsortierung des Materials. Weder muss eine zu grobe stückige Komponente ausgeschleust werden, noch müssen vorab Materialien zu- oder abgeführt werden. Der vorgeschaltete Kerbbrecher kann transportfähiges und dosierfähig aufbereitetes Material erzeugen und die Mischeinrichtung kontinuierlich mit Material versorgen. Dies funktioniert insbesondere bei der Aufbereitung von Boden, wenn dieser bspw. Steine und lehmig, bindiges oder auch sandiges Material enthält. Der Kerbbrecher erzeugt aus den vorhandenen Grobbestandteilen (Steinen) ein Stützkorn, dass in dem Boden verbleiben kann und mit dem lehmig, bindigen oder sonstigen Feinbestandteilen dem Mischer zugeführt wird.

Alternativ ist es möglich, anstelle der Kerbbrecheinrichtung oder anderer Brecher, Siebketten oder sonstige Materialvoraufbereitungseinrichtungen vorzusehen, um den Mischer die dann getrennten Materialkomponenten dosiert und kontrolliert zuzuführen.

Weitere Merkmale vorteilhafter Ausführungsformen der Erfindung sind Gegenstand der Beschreibung, der Zeichnung oder von Unteransprüchen.

In der Zeichnung sind Ausführungsbeispiel der Erfindung veranschaulicht. Es zeigen:
- Fig. 1: eine Aufbereitungseinrichtung auf einem Anhänger, in schematisierter Seitenansicht,
- Fig. 2: die Aufbereitungseinrichtung nach Figur 1, in einer ausschnittsweisen Draufsicht,
- Fig. 3: eine abgewandelte Ausführungsform der Aufbereitungseinrichtung nach Figur 1 jedoch mit hydraulischem Heber zur Anhebung des Fahrgestells, in schematisierter Seitenansicht,
- Fig. 4: eine abgewandelte Ausführungsform der Aufbereitungseinrichtung mit hydraulischem Heber zwischen dem Fahrgestell und der Aufbereitungseinrichtung zur Vergrößerung des zum Materialabtransport dienenden Zwischenraums, in schematisierter Seitenansicht,
- Fig. 4a: einen Kerbbrecher zur Materialvorbereitung in auszugsweiser perspektivischer Ansicht,
- Fig. 5: einen Anhänger mit abnehmbarer Mischeinrichtung, in schematisierter Seitenansicht und
- Fig. 6: die Mischeinrichtung nach Figur 5 aufgestellt auf einem Hilfsrahmen an der Baustelle.

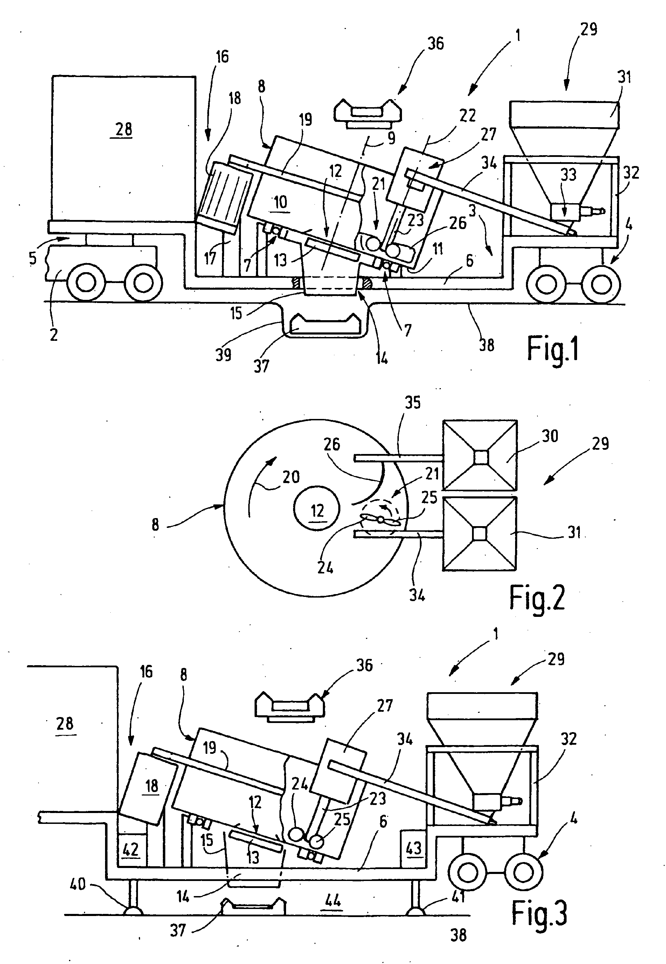

In Figur 1 ist eine Aufbereitungseinrichtung 1 veranschaulicht, die insbesondere effektiv zur Dekontamination von verseuchten Böden eingesetzt werden kann. Die Aufbereitungseinrichtung 1 ist mobil und bspw. von einem in Figur 1 lediglich angeschnitten angedeuteten Sattelschlepper 2 zu bewegen. Die Aufbereitungseinrichtung 1 kann dadurch an einen jeweils gewünschten Einsatzort gefahren werden und dort ihre Arbeit verrichten. Somit können auch große Bodenmengen vorort, z.B. auf einer Baustelle, aufbereitet werden, ohne dass besonders großer Transportaufwand anfiele.

Zu der Aufbereitungseinrichtung 1 gehört ein Fahrgestell 3, das z.B. an einem Ende Räder 4 und an seinem anderen Ende z. B. eine Kupplungseinrichtung 5 zum Anschluss an den Sattelschlepper 2 oder ein anderes geeignetes Zugfahrzeug aufweist. Zu dem Fahrgestell 3 gehört ein.Grundrahmen 6 mit wenigstens einem, vorzugsweise mehreren, sich in Fahrtrichtung, d.h. Längsrichtung erstreckenden Trägern. Diese bilden vorzugsweise ein Podest, auf dem die weiteren Teile der Aufbereitungseinrichtung 1 angeordnet sind.

Der Grundrahmen 6 ist in einem Abschnitt zwischen der Kupplungseinrichtung 5 und den Rädern 6 tief, d.h. höchstens etwa auf Achshöhe der Räder 4 angeordnet. Die Unterkante des Grundrahmens 6 ist etwa 10 cm über dem Boden. Der Grundrahmen kann z.B. durch Luftfederung o. ä. höhneverstellbar sein. Dieser Bereich des Grundrahmens 6 nimmt mit einer entsprechenden Halteeinrichtung eine Lagereinrichtung 7 auf, über die ein vorzugs- und beispielsweise zylindrisch ausgebildeter Mischtrog 8 z.B. um eine sowohl zur Vertikalen als auch zur Horizontalen geneigte Drehachse 9 drehbar gelagert ist. Der Mischtrog 8 weist eine Umfangswand 10 und einen Boden 11 auf. Nach oben hin kann er offen oder durch geeignete Deckel ganz oder teilweise abgedeckt sein. Jedenfalls aber wird eine wenigstens zeitweilig offene Beschickungsöffnung freigegeben. In dem in Figur 1 veranschaulichten Ausführungsbeispiel wird diese durch die gesamte oben offene Oberseite des Mischtrogs 8 gebildet. In dem Behälterboden 11 ist vorzugsweise etwa mittig eine Materialauslassöffnung 12 ausgebildet, unterhalb derer eine Klappe 13 oder ein anderes geeignetes Steuerorgan angeordnet ist, mit dem sich der Materialaustrag aus der Materialauslassöffnung 12 beeinflussen lässt. Die Klappe 13 ist mit einer geeigneten Stelleinrichtung, wie bspw. einem Hydraulikzylinder, einem Elektromotor oder dergleichen, gekoppelt, um die Materialauslassöffnung 12 kontrolliert mehr oder weniger freizugeben..

Unterhalb der Materialauslassöffnung 12 ist in dem Grundrahmen 6 eine Materialdurchlassöffnung 14 ausgebildet, die dazu dient, aufbereitetes aus dem Mischtrog 8 kommendes Material unterhalb des Grundrahmens 6 abzugeben. Um das aufbereitete Material kontrolliert zu leiten, kann ein Fallschacht 15 vorgesehen sein, der sich ausgehend von der Materialauslassöffnung 12 durch die Materialdurchlassöffnung erstreckt. Der Fallschacht 15 endet vorzugsweise knapp unterhalb des Grundrahmens 6 oder schließt bündig mit diesem ab.

Dem Mischtrog 8 kann eine Trog-Antriebseinrichtung 16 zugeordnet sein, die auf dem Grundrahmen 6, z.B. mittels entsprechender Halterungen 17 montiert ist und dazu dient, den Mischtrog 8 in Drehung um die Drehachse 9 zu versetzen. In Figur 1 ist als Getriebemittel zur Verbindung zwischen einem zu der Trogantriebseinrichtung 16 gehörigen Elektromotor 18 und dem Mischtrog 8 ein die Umfangswand 10 des Mischtrogs 8 umfassender Treibriemen 19 veranschaulicht. Der Mischtrogantrieb kann z.B. auch mit Zahnkranz und Zahnrad bzw. mit Reibrad usw., erfolgen Damit lässt sich der Mischtrog 8, wie insbesondere in Figur 2 durch einen Pfeil 20 angedeutet ist, in Drehung versetzen. In dem Mischtrog 8 ist eine Rühreinrichtung 21 angeordnet, zu der eine um eine Drehachse 22 drehende Welle 23 gehört. Die Drehachse 22 ist vorzugsweise parallel zu der Drehachse 9 angeordnet. Von der Welle 23 erstrecken sich ein, zwei oder mehrere gleich oder unterschiedlich ausgebildete Flügel 24, 25 ungefähr in Radialrichtung weg, die je nach Drehzahl dazu dienen, das in dem Mischtrog 8 befindliche Material zu rühren, durchzukneten, zu durchwirbeln, zu zerschlagen und ggfs. auch zu pulverisieren. Unterschiedlich ausgebildete Flügel können unterschiedliche Aufgaben übernehmen.

In den Figuren 1 und 2 ist lediglich eine einzige Rühreinrichtung 21 veranschaulicht, die für die weitaus meisten Einsatzfälle genügt. Jedoch ist es auch möglich, zwei oder mehrere Rühreinrichtungen vorzusehen, die jeweils vorzugsweise exzentrisch bezüglich der Drehachse 9 auf gleichem Radialabstand zu dieser oder in unterscheidlichen Abständen zu der Drehachse 9 angeordnet sein können. Diese Rühreinrichtungen können untereinander gleich oder auch unterschiedlich ausgebildet sein, um gleichsinnig oder gegensinnig mit gleichen oder unterschiedlichen Drehzahlen zu arbeiten. Sie können mit gleichen oder unterschiedlichen Flügeln 24, 25 bestückt sein. Damit lässt sich die Mischintensität insbesondere bei Behandlung bindiger oder schlammiger Materialien, wie bspw. lehmigem Boden oder Klärschlamm, noch weiter steigern.

In dem Mischtrog 8 ist vorzugsweise eine ortsfest angeordnete Schaufel 26 vorgesehen, die gekrümmt ausgebildet und zur Radialrichtung geneigt ist, um z.B. den bei Drehung des Mischtrogs 8 umlaufenden Material eine radial nach innen gerichtete Bewegungskomponente zu erteilen und das Material somit zu der Materialauslassöffnung 12 zu fördern. In Figur 1 und 2 ist jeweils eine solche Schaufel 26 veranschaulicht. Es können mehrere derartige Gebilde vorgesehen werden.

Die Rühreinrichtung 21 ist mit einer Rühr-Antriebseinrichtung, bspw. in Form eines elektrischen Getriebemotors, verbunden. Die Rühr-Antriebseinrichtung 27 ist über nicht weiter veranschaulichte Halterungen z.B. an dem Grundrahmen 6 gehalten. Vorzugsweise ist sie dabei starr gehalten, d.h. der Abstand der Drehachsen 9, 22 ist fest zueinander. Es ist jedoch auch möglich, die Rühreinrichtung 21 und deren Rühr-Antriebseinrichtung 27 insoweit beweglich zu lagern, dass bspw. der Abstand der Drehachsen 9, 22 voneinander variabel ist. Diese Möglichkeit kann dazu genutzt werden, eine geeignete Einstellposition für eine Optimierung des Mischprozesses zu finden. Es ist auch möglich, den Abstand zwischen den Drehachsen 9, 22 während des Betriebs fortwährend zu variieren, bspw. langsam oszillieren zu lassen, um den Mischprozess weiter zu beeinflussen bzw. zu verbessern. Auch kann vorgesehen werden, die Ausrichtung der Drehachsen 9, 22 sowie ggfs. von Drehachsen weiterer Rühreinrichtungen zueinander zu variieren.

Auf dem Fahrgestell 3 ist vorzugsweise im Bereich der vorderen Kupplungseinrichtung 5 ein Bürocontainer 28 angeordnet, der eine Steuerwarte und/oder eine automatische Steuereinrichtung für die Aufbereitungseinrichtung 1 enthalten kann. Über den Bürocontainer 28 bzw. die darin vorhandene Steuereinrichtung kann die Trog-Antriebseinrichtung 16 wie auch die Rühr-Antriebseinrichtung 27 mit Strom versorgt werden. Der Strom kann über eine Kabelzuführung aus dem öffentlichen Energienetz stammen. Weitere Komponenten, wie Verstellantriebe der Klappe 13 sowie Förder- und Dosiereinrichtungen, können bedarfsweise ebenfalls von dem Bürocontainer 28 aus gesteuert werden.

Auf dem Fahrgestell 3 ist desweiteren, zumindest vorzugsweise, eine Speichereinrichtung 29 aufgebaut, die zumindest einen, vorzugsweise zwei oder mehrere Bunker 30, 31 für gleiche oder unterschiedliche Zuschlagstoffe aufweist. Zum Beispiel kann der Bunker 30 Neutralisierungsmittel und der Bunker 31 ein Adsorptionsmittel enthalten. Die Bunker 30, 31 sind vorzugsweise zur Aufnahme pelletierter oder granulierter Zuschlagstoffe eingerichtet. Es können jedoch auch Speichereinrichtungen zur Aufnahme jeglicher Zuschlagstoffe wie z.B. flüssige, pulverförmige, körnige Zuschlagstoffe vorgesehen werden.

Die Speichereinrichtung 29 ist vorzugsweise oberhalb der Räder 4 in einem gesonderten Gestell 32 gehalten, das mit dem Fahrgestell 3 fest oder lösbar oder schwenkbar verbunden ist. An den Unterseiten der Bunker 30, 31 können Dosiereinrichtungen 33, z.B. in Form von Zellenradschleusen angeordnet sein. Von diesem führt jeweils z.B. eine Förderschnecke 34, 35 zu einem Bereich oberhalb des Mischtrogs 8. Die Zugabe der Bindemittel oder sonstigen Additive kann wahlweise kontinuierlich oder auch chargenweise, d.h. diskontinuierlich erfolgen. Beim Chargenbetrieb wird der Zuschlagstoff z.B. aus der Förderschnecke 34, 35, vorzugsweise in einen Wiegebehälter gefördert, der sich über dem Mischtrog befindet (nicht dargestellt). Dieser Wiegebehälter entleert sich jeweils in einem kurzen Entleerungsvorgang und verkürzt damit den Zeitbedarf für die Zuschlagstoffzufuhr.

Zum Beispiel über eine in Figur 1 schematisch angeordnete Bandfördereinrichtung 36 kann dem Mischtrog 8 von oben her das Mischgut zugeführt werden. Dieses kann aus einem Zwischenlager, z. B. Bunkern, herangeführt werden. Die Bandfördereinrichtung 36 kann auch Material von einer Brechereinrichtung, einer Siebeinrichtung, einer Vormischeinrichtung, einer Siebbrechereinheit oder dergleichen heranführen. Die Bandfördereinrichtung 36 kann dabei an einer entsprechenden auf einem Fahrzeug aufgebauten Vorbehandlungseinrichtung angebracht sein und zum Mischer führen. Die Bandfördereinrichtung 36 kann an ihrem Anfang mit einem Aufgabetrichter versehen sein, der bspw. mit einem Radlader oder Bagger befüllt wird. Alternativ kann auch eine Beschickung des Mischtrogs direkt z.B. mittels Radlader oder Bagger erfolgen. Zum Beispiel wirft der Bagger das Mischgut direkt in den Mischer oder in eine über dem Mischtrog 8 angeordnete Wägeeinrichtung. Sämtliche Wiegedaten können über die vorzugsweise in dem Bürocontainer 28 untergebrachte Steuerung gespeichert und/oder verarbeitet werden. Sie können bspw. als Grundlage für die automatische Bindemittelzugabe dienen.

Anstelle der Bandfördereinrichtung 36 kann auch eine Förderschnecke, ein Druckschlauch zur mediengetragenen Materialforderung oder dergleichen Fördereinrichtung eingesetzt werden.

Zur Abfuhr des aufbereiteten Materials kann eine weitere Bandfördereinrichtung 37 vorgesehen sein, die unterhalb des Grundrahmens 6 insbesondere unterhalb der unteren Auslassöffnung des Fallschachts 15, angeordnet ist. Um den erforderlichen Platz zu schaffen, kann in den Boden 38, auf dem der Sattelschlepper 2 und die Räder 4 ruhen, ein Graben 39 ausgehoben worden sein, in dem die Bandfördereinrichtung 38 steht. Auf diese Weise wird unterhalb des Grundrahmens 6 ausreichend Platz zum Abtransport des aufbereiteten Materials geschaffen. Alternativ kann ein kurzes Abzugs-Übergabeband das Mischgut von der Auslassöffnung zu einer längeren Bandfördereinrichtung (Halteband) fördern.

Die insoweit beschriebene Aufbereitungseinrichtung 1 arbeitet wie folgt:

Über die Bandfördereinrichtung 36 wird während des Betriebs fortwährend das Aufgabegut/Mischgut, bspw. Bodenaushub, herangeführt. Die in dem Bürocontainer 28 untergebrachte Steuereinrichtung steuert die Trog-Antriebseinrichtung 16 und die Rühr-Antriebseinrichtung 27 so an, dass diese jeweils mit gewünschter Drehzahl und Drehrichtung rotieren. Das herangeführte Material kann vorgesiebt, vorgebrochen oder sonst wie geeignet vorbehandelt sein. Es kann z.B. sandiges, lehmiges, schlammiges, toniges, stückiges, etc., Material sein. Es sammelt sich vorwiegend in Figur 1 in der rechten unteren Ecke des Mischtrogs 8, der z.B. vorzugsweise relativ langsam rotiert. Die Rühreinrichtung 21 rotiert hingegen relativ schnell. Über die Förderschnecke 34 und/oder 35 wird der gewünschte Zuschlagstoff fortwährend oder portionsweise zugeführt. Bei dem Zuschlagstoff kann es sich bspw. um granulierte oder pelletierte Aktivkohle handeln. Die Aktivekohle-Pellets werden von der Rühreinrichtung 31 in das aufzubereitende Material eingearbeitet und dabei zerkleinert. Bei entsprechender Drehzahl kann der granulierte Zuschlagstoff sowohl pulverisiert als auch feinst verteilt in das aufzubereitende Material eingearbeitet werden, und zwar auch dann, wenn dieses lehmige, klebrige oder bindige Bestandteile enthält.

Der Betrieb ist chargenweise möglich. Dazu wird mittels der Klappe 13 die Materialauslassöffnung 12 zunächst verschlossen und der rotierende Mischtrog 8 mittels der Bandfördereinrichtung 36 allmählich gefüllt. Währenddessen wird über z.B. die Förderschnecke 34 und/oder 35 Zuschlagstoff zudosiert und durch die Rühreinrichtung 21 eingearbeitet. Diese rotiert dabei mit einer Drehzahl, die vorzugsweise so hoch ist, dass sie nicht nur die pelletierten Zuschlagstoffe, sondern auch Klumpen des zugeführten Materials zerschlägt, zerkleinert und letztendliche eine vollständige Homogenisierung des Materials bewirkt. Dazu kann die Drehzahl des Mischtrogs 8 wie auch die Drehzahl der Rühreinrichtung 21 konstant gehalten oder nach einem vorgegebenen Programm, z.B. einem zeitlichen Profil, variiert, d.h. vergrößert oder vermindert werden. Außerdem können Drehrichtungen gewechselt werden. Es ist darüberhinaus möglich, den Prozess, bspw. durch Kameras, zu beobachten oder durch Sensoren den Mischfortschritt zu erfassen. Durch manuellen oder automatischen Eingriff kann in Reaktion auf die so erfassten Parameter des Mischvorgangs die Drehzahl der Trog-Antriebseinrichtung 16 oder der Rühr-Antriebseinrichtung 27 angepasst werden. Außerdem kann die Menge der zudosierten Zuschlagstoffe adaptiv angepasst werden und zwar in Abhängigkeit von durch nicht weiter veranschaulichte Sensoren gemessenen Größen, wie Feuchtigkeit, Säuregrad oder dergleichen. Solche Sensoren können bspw. im Bereich der Schaufel 26 angeordnet werden. Der Mischtrog 8 kann bedarfsweise mit einer Heizeinrichtung oder auch einer Kühleinrichtung verbunden sein, um gewünschte erhöhte oder abgesenkte Temperaturen in seinem Innenraum einzustellen. Außerdem kann er bedarfsweise so abgeschlossen sein, dass in seinem Innenraum Über- oder Unterdruck aufgebaut werden kann.

Figur 3 veranschaulicht eine abgewandelte Ausführungsform der Aufbereitungseinrichtung 1. Soweit nachfolgend nicht ausdrücklich Unterschiede beschrieben sind, gilt die vorstehende Beschreibung unter Zugrundelegung gleicher Bezugszeichen entsprechend. Während die Aufbereitungseinrichtung 1 nach Figur 1 während ihres Betriebs auf ihren Rädern 4 sowie dem Sattelschlepper 5 bzw. Abstellstützen ruht, weist die Aufbereitungseinrichtung 1 nach Figur 3 ausfahrbare Füße 40, 41 auf, die zu vorzugsweise an dem Grundrahmen angeordneten z.B. hydraulischen, pneumatischen, manuellen oder elektrischen Hebern 42, 43 gehören. Die Füße 41, 42 werden bei Nichtbedarf an die Unterseite des Grundrahmens 6 herangezogen. Soll die Aufbereitungseinrichtung 1 an einem geeigneten Aufstellort auf dem Boden 38 aufgestellt werden, werden die Füße 40, 41 so weit nach unten verstellt, dass sie auf dem Boden 38 aufsetzen und letztendlich den Grundrahmen 6 nach oben heben. Die Räder 4 heben dabei von dem Boden 38 ab. Es entsteht unter dem Grundrahmen 4 ein Freiraum 44, der so groß ist, dass die Bandfördereinrichtung 37 in diesem Freiraum 44 Platz findet. Der Hub der Füße 41, 42 kann reduziert werden, wenn der Grundrahmen 6 z.B. mit Lagerholz schrittweise unterbaut wird. Es ist somit nicht erforderlich einen Graben anzulegen, um die Bandfördereinrichtung 37 unterzubringen. Für den Betrieb dieser Aufbereitungseinrichtung 1 gelten im Übrigen die obigen Ausführungen entsprechend. Die Heber 42, 43 sind vorzugsweise hydraulische bzw. mechanisch verriegelbar. Die Aufbereitungseinrichtung 1 kann im Ganzen auch so weit angehoben oder aufgebockt werden, dass das Material an dem Fallschacht 15 direkt z.B. mit einem Radlader abgenommen werden kann. Die Bandfördereinrichtung 37 kann dann entfallen.

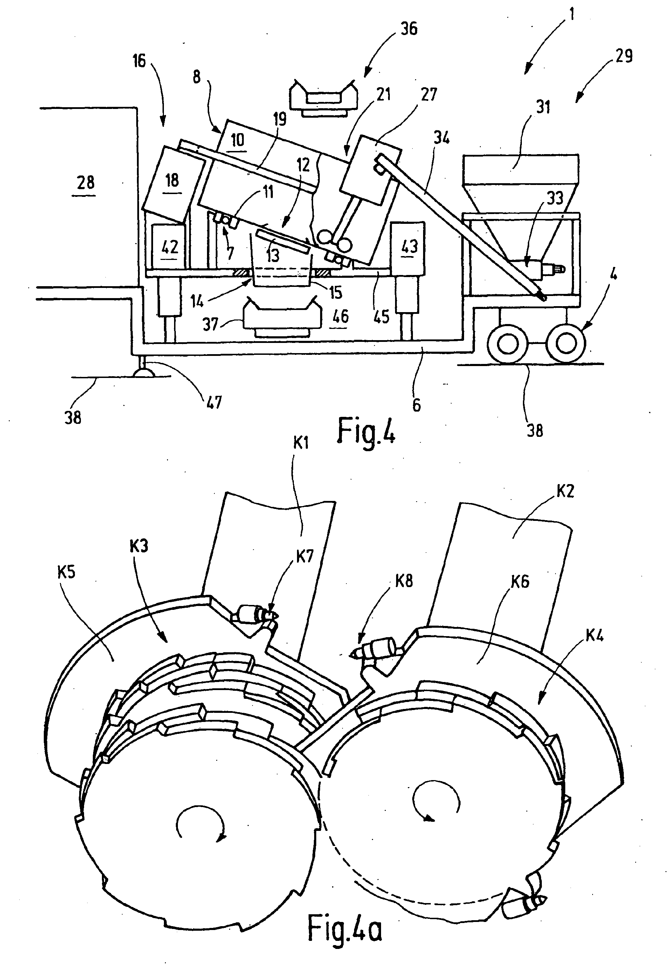

Eine weitere Ausführungsform der Aufbereitungseinrichtung 1 ist in Figur 4 veranschaulicht. Bei dieser ist ein Hilfsrahmen 45 vorgesehen, der oberhalb des Grundrahmens 6 angeordnet ist, und mit diesem einen Freiraum 46 begrenzt. Dieser Freiraum 46 dient der Aufnahme der Bandfördereinrichtung 37 oder einer sonstigen geeigneten Fördereinrichtung zum Abtransport des aufbereiteten Materials. Der Hilfsrahmen 45 trägt den Mischtrog 8 bzw. dessen Lagereinrichtung 7, die Trog-Antriebseinrichtung 16 und die Rühreinrichtung 21 nebst Rühr-Antriebseinrichtung 27. Die Materialdurchlassöffnung 14 ist in dem Hilfsrahmen 45 ausgebildet. Der Fallschacht 15 kann sich somit an der Materialdurchlassöffnung 14 durch den Hilfsrahmen 45 erstrecken. Wie bei dem vorstehenden Ausführungsbeispiel kann auf den Fallschacht 15 notfalls verzichtet werden. Außerdem kann er in den Hilfsrahmen 45 integriert sein. Die Materialdurchlassöffnung 14 kann wesentlich größer sein als der Fallschacht 15.

Bei einer bevorzugten Ausführungsform ist der Hilfsrahmen 45 mit dem Grundrahmen 6 über z.B. hydraulische oder elektrische Heber 42,43 verbunden, über die die Höhe des Freiraums 46 einstellbar ist. Zum Beispiel kann der Hilfsrahmen 45 zu Transportzwecken ganz auf den Grundrahmen 6 abgesenkt oder wenigstens nah an diesen herangeführt werden. Zum Betrieb der Einrichtung hingegen der Hilfsrahmen 45 so weit angehoben werden, dass der Freiraum 46 eine große oder eine maximale Höhe erhält. Die Förderschnecken 34, 35 oder entsprechende Fördereinrichtungen sind vorzugsweise höhenverstellbar oder schwenkbar gelagert, um eine einfache Anpassung an unterschiedliche Verstellhöhen des Grundrahmens 45 zu gestatten. Die Heber 42, 43 sind vorzugsweise hydraulisch oder mechanisch verriegelbar.

Der Grundrahmen 6 kann zusätzlich mit Stützfüßen versehen sein, um die Räder 4 im Betrieb von dem Boden 38 abzuheben. Bedarfsweise genügt jedoch schon ein vorderer Stützfuß 47, der auf dem Boden 38 aufstellbar ist, wenn der Sattelschlepper 2 abgekuppelt wird. Entsprechendes gilt für die Ausführungsform nach Figur 1.

Die Figur 4a veranschaulicht eine Kerbrechereinrichtung, die zur Voraufbereitung des Materials vorgesehen sein kann, dass der Aufbereitungseinrichtung 1 über die Bandfördereinrichtung 36 zugeführt wird. Die Kerbbrechereinrichtung nach Fig. 4a kann mit jeder der vor- oder nachstehend beschriebenen Aufbereitungseinrichtung 1 verwendet werden. Wesentlicher Bestandteil der Kerbbrecheinrichtung sind zwei Wellen K1, K2, die im Wesentlichen parallel zueinander und vorzugsweise horizontal orientiert sind. Die beiden Wellen K1, K2 sind gegenläufig angetrieben. An den Oberseiten der beiden Wellen K1, K2 gedachte Geschwindigkeitsvektoren der Umlaufbewegung weisen aufeinander zu. Auf den Wellen K1, K2 sitzen Brechwerkzeuge, zu denen Zahnscheiben K3, K4 gehören können. Jeder Zahnscheibe K3 der Welle K1 ist vorzugsweise eine Zahnscheibe K4 der Welle K2 zugeordnet. Sie laufen Stirn gegen Stirn mit engem Spalt und weisen keinen wesentlichen Axialversatz zueinander auf. Zwischen den Zahnscheiben K3, wie auch den Zahnscheiben K4, sind jeweils an axial voneinander beabstandeten Stellen Lücken ausgebildet, in die größere Scheiben K5, K6 greifen. Diese Scheiben tragen Meißel K7, K8 oder anderweitige entsprechende Brechwerkzeuge, die dazu dienen, Grobbestandteile wie größere Steine aufzusprengen, um sie mahlfähig zu machen. Die entstehenden kleineren Bruchstücke werden dann von den Zahnscheiben K3, K4 zu einem relativ feinen Korn aufgemahlen. Das von dieser Kerbbrecheinrichtung abgegebene Material kann ohne weitere Nachbehandlung, insbesondere ohne Klassierung oder Separation, der Aufbereitungseinrichtung 1 zugeführt werden. Wegen des genauen Aufbaus der Kerbbrecheinrichtung wird auf die Gebrauchsmusterschrift DE 20 214 956U1 ausdrücklich verwiesen.

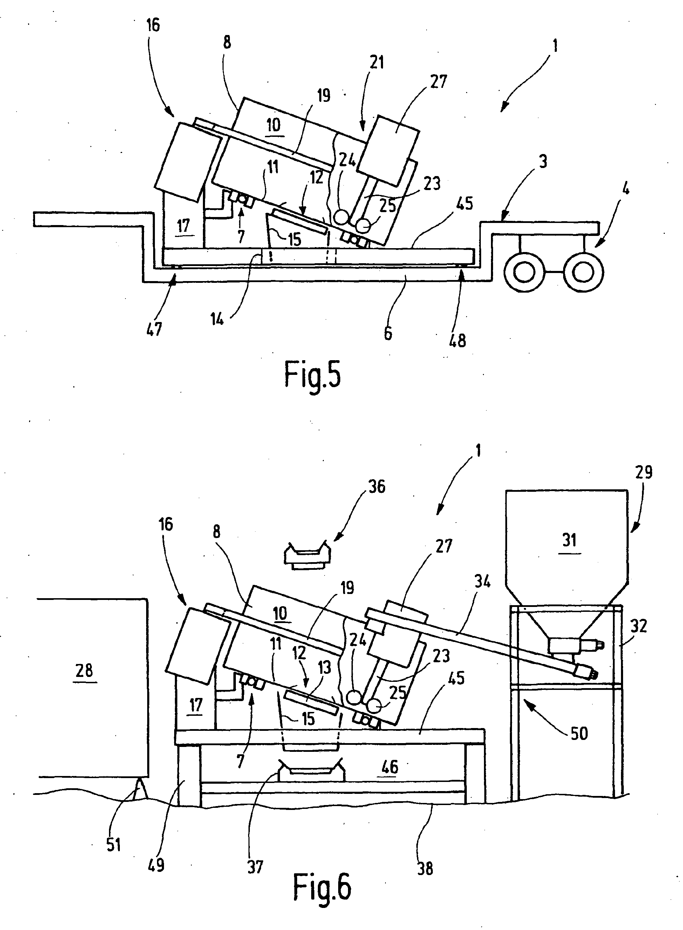

Die Figuren 5 und 6 veranschaulichen eine weitere Ausführungsform der Aufbereitungseinrichtung 1, wobei Figur 5 den Zustand zur Verladung und zum Transport veranschaulicht, während in Figur 6 der Betrieb der Aufbereitungseinrichtung 1 veranschaulicht ist.

Zu der Aufbereitungseinrichtung 1 gehört wiederum der Hilfsrahmen 45, auf dem der Mischtrog 8 nebst Trog-Antriebseinrichtung 16 und Rühreinrichtung 21 angeordnet ist. Der Hilfsrahmen 45 ist durch zumindest eine Materialdurchlassöffnung 14 unterbrochen, durch die sich der Fallschacht 15 erstreckt. Der Hilfsrahmen 45 ist durch geeignete Aufnahmen 47, 48 temporär mit dem Grundrahmen 6 verbunden. Die Aufnahmen 47, 48 können bspw. durch formschlüssige Lager gebildet sein, die zu entsprechenden Ausnehmungen in dem Hilfsrahmen 45 passen. Oberhalb der Räder 4 kann wiederum eine Speichereinrichtung ebenfalls von dem Fahrgestell 3 lösbar angeordnet sein. Desgleichen kann ein Bürocontainer 28 an dem vorderen Ende des Fahrgestells 3 angeordnet sein. Die Anordnung ist dann jeweils mit Figur 1 vergleichbar, wobei das entsprechende aus Figur 6 ersichtliche Gestell 32 und der Bürocontainer 28 dann vorzugsweise einzeln oder gemeinsam von dem Fahrgestell 3 lösbar sind. An dem Einsatzort wird der Hilfsrahmen 45, bspw. mittels eines Krans, von dem Fahrgestell 3 abgehoben. Die Aufnahmen 47, 48 geben den Hilfsrahmen 45 frei. Dieser kann dann auf einen auf der

Baustelle errichteten, anderweitig dort hin transportierten, aus Metall oder anderem Material bestehenden Gestell 49, aufgestellt werden. Das Gestell 49 kann z.B. durch Beton-Punktfundamente gebildet werden. Es lässt zu dem Boden 38, auf oder in dem es steht, den Freiraum 46 frei, in dem die Bandfördereinrichtung 37 angeordnet werden kann. Von oben her wird Material wiederum z.B. mit der Bandfördereinrichtung 36 herangeführt, die an eine Vorbrecheinrichtung, Siebeinrichtung, Vormischeinrichtung oder dergleichen angeschlossen sein kann. Das Gestell 32 mit der Speichereinrichtung 29 kann ebenfalls auf ein auf der Baustelle vorhandenes oder errichtetes Hilfsgestell 50 aufgesetzt werden, wenn es an dem Fahrgestell 3 lösbar gehalten und von diesem abgenommen ist. Entsprechend kann auch der Bürocontainer 28 aus geeigneten Hilfsfundamenten 51 ruhen. Es können einzelne Teile oder auch die komplette Anlage vom Fahrgestell gehoben werden.

Hinsichtlich der Arbeitsweise dieser Aufbereitungseinrichtung 1 wird ansonsten auf die vorstehende Beschreibung verwiesen.

Die Aufbereitungseinrichtung 1 weist ein Fahrgestell 3 mit einem Rahmen 6 auf, der mit einer Materialdurchlassöffnung 14 versehen ist. Auf dem Rahmen 6 sitzt eine Mischeinrichtung mit einem Mischtrog 8, vorzugsweise einer TrogAntriebseinrichtung 16, einer Rühreinrichtung 21 und einer Rühr-Antriebsweinrichtung 27. Der Mischtrog 8 weist an seinem Boden 11 eine Materialauslassöffnung 12 auf, die unmittelbar oberhalb der Materialdurchlassöffnung des Rahmens 6 angeordnet ist. Es kann ein Fallschacht 15 vorgesehen sein, der sich von der Materialauslassöffnung 12 durch die Materialdurchlassöffnung 14 hindurch erstreckt. Der Materialauslass kann durch eine Klappe 13 reguliert werden. Es wird insgesamt eine kompakte Bauform einer Aufbereitungseinrichtung erhalten, die sich z.B. zum intensivsten Durchmischen von Materialien und zur homogenen Einarbeitung, bspw. von Adsorptionsmitteln, eignet, die z.B. zur Immobilisierung von Gift oder Schadstoffen dienen können.

Die vorzugsweise im Ganzen eingehauste Aufbereitungseinrichtung 1 kann chargenweise betrieben werden. Dazu wird jeweils periodisch von oben befüllt und über die Materialauslassöffnung 12 entleert. Alternativ kann sie im kontinuierlichen Betrieb arbeiten. Über die Bandfördereinrichtung 36 wird dann ein kontinuierlicher Materialstrom zugeführt, während die Klappe 13 die Materialauslassöffnung 12 so weit freigibt, dass ein entsprechend geringer Materialstrom abgegeben wird. Über Sensoren kann sichergestellt werden, dass der abgegebene Materialstrom jeweils so reguliert wird, dass die in dem Mischtrog 8 vorhandene Materialmenge konstant ist. Beispielsweise können an dem Grundrahmen 6 oder dem Hilfsrahmen 45/49 oder zwischen beiden oder direkt am Mischer Wägezellen angeordnet werden. Diese bestimmen das Gewicht der Gesamtanordnung und somit auch das Gewicht der Füllung in dem Mischtrog 8. Um es konstant zu halten, kann die Klappe 13 reguliert werden. Es ist jedoch auch möglich, mit konstanten Materialaustrag zu fahren und die Mischtrogfülllung konstant zu halten, indem der Materialeintrag über die Bandfördereinrichtung 36 gesteuert wird. Diese Steuerungsart wird bevorzugt, um eine optimale Homogenisierung des aufzubereitenden Materials zu erzielen. Wird bspw. die Qualität des abgegebene Materials mit geeigneter Sensorik überwacht und der Materialeintrag entsprechend nachreguliert, ergibt sich ein Aufbereitungssystem, bei dem die Durchlaufzeit selbstadaptiv so eingestellt wird, dass die gewünschte Materialqualität erhalten wird. Die dem Mischtrog 8 zugeordneten Wiegezellen können wahlweise z.B. direkt an dem Grundrahmen 6, an dem Hilfsrahmen 45, an der Lagereinrichtung 7 oder notfalls auch direkt an dem Mischtrog 8 montiert sein. Alternativ kann das komplette mobile Fahrgestell 6 auf einer Wiegeeinrichtung stehen. Alternativ kann jedes Maschinenteil 1 separat auf einer Wiegeeinrichtung stehen.

Eine mobile Aufbereitungseinrichtung 1 weist ein Fahrgestell 3 mit einem Rahmen 6 auf, der mit einer Materialdurchlassöffnung 14 versehen ist. Auf dem Rahmen 6 sitzt eine Mischeinrichtung mit einem Mischtrog 8, vorzugsweise einer Trog-Antriebseinrichtung 16, einer Rühreinrichtung 21 und einer Rühr-Antriebsweinrichtung 27. Der Mischtrog 8 weist an seinem Boden 11 eine Materialauslassöffnung 12 auf, die unmittelbar oberhalb der Materialdurchlassöffnung des Rahmens 6 angeordnet ist. Es kann ein Fallschacht 15 vorgesehen sein, der sich von der Materialauslassöffnung 12 durch die Materialdurchlassöffnung 14 hindurch erstreckt. Der Materialauslass kann durch eine Klappe 13 reguliert werden. Es wird insgesamt eine kompakte Bauform einer Aufbereitungseinrichtung erhalten, die sich zum intensivsten Durchmischen von Materialien und zur homogenen Einarbeitung, bspw. von Adsorptionsmitteln, eignet, die z.B. zur Immobilisierung von Gift oder Schadstoffen dienen können.

## Patentansprüche

1. Aufbereitungseinrichtung (1) für Kontaminierte Materialien, mit einem vertikal oder schräg angeordneten Mischtrog (8), der eine Umfangswand (10) und einen Behälterboden (11) aufweist und von oben her mit dem aufzubereitenden Material zu beschicken ist und der an seinem Behälterboden (11) eine Materialauslassöffnung (12) aufweist,
mit einer Rühreinrichtung (21), die in dem Mischtrog (8) angeordnet ist, und
mit einer Rühr-Antriebseinrichtung (27) zum drehenden Antrieb der Rühreinrichtung (21),
**gekennzeichnet durch**
ein Fahrgestell (3), das einen im Wesentlichen horizontal orientierten Grundrahmen (6) aufweist,
mit einer Materialdurchlassöffnung (14) in dem Grundrahmen (6) unterhalb der Materialauslassöffnung (12), um eine Abnahme des aufbereiteten Materials unterhalb des Grundrahmens (6) zu ermöglichen,
wobei die Rühreinrichtung (21) an dem Grundrahmen (6) gehalten ist.

2. Aufbereitungseinrichtung (1) für Kontaminierte Materialien,
mit einem vertikal oder schräg angeordneten Mischtrog (8), der eine Umfangswand (10) und einen Behälterboden (11) aufweist und von oben her mit dem aufzubereitenden Material zu beschicken ist und der an seinem Behälterboden (11) eine Materialauslassöffnung (12) aufweist,
mit einer Rühreinrichtung (21), die in dem Mischtrog (8) angeordnet ist, und
mit einer Rühr-Antriebseinrichtung (16) zum drehenden Antrieb der Rühreinrichtung (21),
**gekennzeichnet durch**
ein Fahrgestell (3), das einen im Wesentlichen horizontal orientierten Grundrahmen (6) aufweist,
mit einem Freiraum (46) zwischen dem Grundrahmen (6) und der Materialauslassöffnung (12), um eine Abnahme des aufbereiteten Materials oberhalb des Grundrahmens (6) zu ermöglichen,
wobei die Rühreinrichtung (21) an dem Grundrahmen (6) gehalten ist.

3. Aufbereitungseinrichtung (1) für Kontaminierte Materialien,
mit einem vertikal oder schräg angeordneten Mischtrog (8), der eine Umfangswand (10) und einen Behälterboden (11) aufweist und von oben her mit dem aufzubereitenden Material zu beschicken ist und der an seinem Behälterboden (11) eine Materialauslassöffnung (12) aufweist,
mit einer Rühreinrichtung (21), die in dem Mischtrog (8) angeordnet ist, und
mit einer Rühr-Antriebseinrichtung (27) zum drehenden Antrieb der Rühreinrichtung (21)
**gekennzeichnet durch**
ein Fahrgestell (3), das einen im Wesentlichen horizontal orientierten Grundrahmen (6) aufweist,
mit einem Hilfsrahmen (45), der auf dem Grundrahmen (6) angeordnet und lösbar mit diesem verbunden sowie bedarfsweise auf einem ortsfest aufstellbares Gestell (49) oder unmittelbar auf tragfähigem Boden (38) aufstellbar ist,
wobei die Rühreinrichtung (21) an dem Hilfsrahmen (45) gehalten ist.

4. Aufbereitungseinrichtung nach Anspruch 1, 2 oder 3, **dadurch gekennzeichnet, dass** der Mischtrog (8) um eine senkrechte oder vertikale Achse drehbar gelagert und von einer Trog-Antriebseinrichtung (16) angetrieben ist.

5. Aufbereitungseinrichtung nach Anspruch 1, 2 oder 3, **dadurch gekennzeichnet, dass** das Fahrgestell (3) zu einem Fahrzeug-Anhänger gehört.

6. Aufbereitungseinrichtung nach Anspruch 1, 2 oder 3, **dadurch gekennzeichnet, dass** der Fahrzeug-Anhänger ein Sattelauflieger oder ein Schienenfahrzeug ist.

7. Aufbereitungseinrichtung nach Anspruch 1, 2 oder 3, **dadurch gekennzeichnet, dass** das Fahrgestell (3) einen Steuerungscontainer (28) trägt, der vorzugsweise zugleich Bürocontainer ist.

8. Aufbereitungseinrichtung nach Anspruch 1, 2 oder 3, **dadurch gekennzeichnet, dass** das Fahrgestell (3) eine Zuschlagstoff-Speichereinrichtung (29) vorzugsweise mit Dosiereinrichtung trägt.

9. Aufbereitungseinrichtung nach Anspruch 1, 2 oder 3, **dadurch gekennzeichnet, dass** sie Mischeinrichtung einen Mischtrog (8) aufweist, der um eine zur Vertikalen geneigte oder senkrechte Drehachse (9) drehbar gelagert und durch die Trog-Antriebseinrichtung (16) drehend angetrieben ist.

10. Aufbereitungseinrichtung nach Anspruch 9, **dadurch gekennzeichnet, dass** die Drehachse (9) des Mischtrogs (8) und eine Drehachse (22) der Rühreinrichtung (21) zueinander parallel ausgerichtet sind.

11. Aufbereitungseinrichtung nach Anspruch 9, **dadurch gekennzeichnet, dass** die Rühr-Antriebseinrichtung (27) und die Trog-Antriebseinrichtung (16) unabhängig voneinander steuerbar sind.

12. Aufbereitungseinrichtung nach Anspruch 9, **dadurch gekennzeichnet, dass** die Rühr-Antriebseinrichtung (27) und die Trog-Antriebseinrichtung (16) gleichsinnig drehend angetrieben sind.

13. Aufbereitungseinrichtung nach Anspruch 9, **dadurch gekennzeichnet, dass** die Rühr-Antriebseinrichtung (27) und die Trog-Antriebseinrichtung (16) gegensinnig drehend angetrieben sind.

14. Aufbereitungseinrichtung nach Anspruch 9, **dadurch gekennzeichnet, dass** die Rühr-Antriebseinrichtung (27) mit wesentlich höherer Drehzahl angetrieben ist als die Trog-Antriebseinrichtung (16).

15. Aufbereitungseinrichtung nach Anspruch 9, **dadurch gekennzeichnet, dass** die Drehzahlen des Mischtrogs (8) und der Rühreinrichtung (21) während des Betriebs nach einem vorgegebenen Programm variierbar sind.

16. Aufbereitungseinrichtung nach Anspruch 1, 2 oder 3, **dadurch gekennzeichnet, dass** das Gewicht der Füllung des Mischtrogs (8) über Wiegezellen erfasst wird.

17. Aufbereitungseinrichtung nach Anspruch 1, 2 oder 3, **dadurch gekennzeichnet, dass** an die Materialauslassöffnung (12) ein Fallschacht (15) anschließt.

18. Aufbereitungseinrichtung nach Anspruch 17, **dadurch gekennzeichnet, dass** sich der Fallschacht (15) durch die Materialdurchlassöffnung (14) hindurch erstreckt.

19. Aufbereitungseinrichtung nach Anspruch 1 oder 2, **dadurch gekennzeichnet, dass** das Fahrgestell (3) mit einer Hebeeinrichtung (42, 43) versehen ist.

20. Aufbereitungseinrichtung nach Anspruch 19, **dadurch gekennzeichnet, dass** die Hebeeinrichtung (42, 43) zwischen dem Grundrahmen (6) und dem Boden wirksam ist, um den Grundrahmen (6) in Bezug auf den Boden (38) anzuheben und einen Freiraum für eine Materialfördereinrichtung (37) zu schaffen.

21. Aufbereitungseinrichtung nach Anspruch 2, **dadurch gekennzeichnet, dass** zwischen dem Mischtrog (8) und dem Grundgestell (6) eine Hebeeinrichtung (42, 43) angeordnet ist, um den Zwischenraum (46) bedarfsweise zu vergrößern.

22. Aufbereitungseinrichtung nach Anspruch 1, 2 oder 3, **dadurch gekennzeichnet, dass** die Aufbereitungseinrichtung mit Material beschickt wird, das vorort durch einen Kerbbrecher erzeugt worden ist.

## Claims

1. Processing plant (1) for contaminated materials, with a vertically arranged or inclined mixing tank (8), which has a peripheral wall (10) and a container base (11) and is to be filled from the top with the material to be processed and has a material outlet (12) on its container base (11), with an agitator means (21), which is arranged in the mixing tank (8), and with an agitator drive means (27) for rotational drive of the agitator means (21),
**characterised by**
a running gear (3), which has a substantially horizontally oriented base frame (6), with a passage (14) for material in the base frame (6) below the material outlet (12) to allow removal of the processed material below the base frame (6),
wherein the agitator means (21) is held on the base frame (6).

2. Processing plant (1) for contaminated materials, with a vertically arranged or inclined mixing tank (8), which has a peripheral wall (10) and a container base (11) and is to be filled from the top with the material to be processed and has a material outlet (12) on its container base (11), with an agitator means (21), which is arranged in the mixing tank (8), and with an agitator drive means (16) for rotational drive of the agitator means (21),
**characterised by**
a running gear (3), which has a substantially horizontally oriented base frame (6), with a free space (46) between the base frame (6) and the material outlet (12) to allow removal of the processed material above the base frame (6),
wherein the agitator means (21) is held on the base frame (6).

3. Processing plant (1) for contaminated materials, with a vertically arranged or inclined mixing tank (8), which has a peripheral wall (10) and a container base (11) and is to be filled from the top with the material to be processed and has a material outlet (12) on its container base (11), with an agitator means (21), which is arranged in the mixing tank (8), and with an agitator drive means (27) for rotational drive of the agitator means (21),
**characterised by**
a running gear (3), which has a substantially horizontally oriented base frame (6), with an auxiliary frame (45), which is arranged on the base frame (6) and is detachably connected thereto and also can be erected on a fixedly erectable frame (49) or directly on stable ground (38) as required,
wherein the agitator means (21) is held on the auxiliary frame (45).

4. Processing plant according to claim 1, 2 or 3, **characterised in that** the mixing tank (8) is disposed to be rotatable around a perpendicular or vertical axis and is driven by a tank drive means (16).

5. Processing plant according to claim 1, 2 or 3, **characterised in that** the running gear (3) belongs to a vehicle trailer.

6. Processing plant according to claim 1, 2 or 3, **characterised in that** the vehicle trailer is a semitrailer or a rail vehicle.

7. Processing plant according to claim 1, 2 or 3, **characterised in that** the running gear (3) carries a control container (28), which is preferably also an office container.

8. Processing plant according to claim 1, 2 or 3, **characterised in that** the running gear (3) carries an aggregate storage means (29) preferably with metering device.

9. Processing plant according to claim 1, 2 or 3, **characterised in that** the mixing device has a mixing tank (8), which is disposed to be rotatable around a rotational axis (9), which is inclined to the vertical or perpendicular, and is rotatably driven by the tank drive means (16).

10. Processing plant according to claim 9, **characterised in that** the rotational axis (9) of the mixing tank (8) and a rotational axis (22) of the agitator means (21) are oriented parallel to one another.

11. Processing plant according to claim 9, **characterised in that** the agitator drive means (27) and the tank drive means (16) are controllable independently of one another.

12. Processing plant according to claim 9, **characterised in that** the agitator drive means (27) and the tank drive means (16) are driven to rotate in the same direction.

13. Processing plant according to claim 9, **characterised in that** the agitator drive means (27) and the tank drive means (16) are driven to rotate in contrary direction.

14. Processing plant according to claim 9, **characterised in that** the agitator drive means (27) is driven at a substantially higher rotational speed than the tank drive means (16).

15. Processing plant according to claim 9, **characterised in that** the rotational speeds of the mixing tank (8) and the agitator means (21) are variable during operation according to a predetermined program.

16. Processing plant according to claim 1, 2 or 3, **characterised in that** the weight of the charge of the mixing tank (8) is determined by means of weighing cells.

17. Processing plant according to claim 1, 2 or 3, **characterised in that** the material outlet (12) adjoins a drop shaft (15).

18. Processing plant according to claim 17, **characterised in that** the drop shaft (15) extends through the material passage (14).

19. Processing plant according to claim 1 or 2, **characterised in that** the running gear (3) is provided with a hoisting means (42, 43).

20. Processing plant according to claim 19, **characterised in that** the hoisting means (42, 43) is active between the base frame (6) and the ground to lift the base frame (6) in relation to the ground (38) and create a free space for a material conveying device (37).

21. Processing plant according to claim 2, **characterised in that** a hoisting means (42, 43) is arranged between the mixing tank (8) and the base frame (6) to enlarge the intermediate space (46) as required.

22. Processing plant according to claim 1, 2 or 3, **characterised in that** the processing plant is loaded with material, which has been generated in situ by a crusher.

## Revendications

1. Dispositif de traitement (1) de matières contaminées, comprenant une cuve de mélange (8) installée verticalement ou de façon inclinée, qui présente une paroi périphérique (10) et un fond de récipient (11) et est chargée d'en haut avec les matières à traiter et présente une ouverture de sortie de matière (12) dans son fond de récipient (11),
comprenant un dispositif agitateur (21) qui est installé dans la cuve de mélange (8), et
comprenant un dispositif d'entraînement d'agitation (27) destiné à entraîner en rotation le dispositif agitateur (21),
**caractérisé par le fait qu'**il comporte un châssis (3) qui présente un cadre de base (6) à orientation sensiblement horizontale,
comprenant une ouverture de passage de matière (14) dans le cadre de base (6), située en dessous de l'ouverture de sortie de matière (12), afin de permettre la prise en charge des matières traitées en dessous du cadre de base (6),
le dispositif agitateur (21) étant tenu sur le cadre de base (6).

2. Dispositif de traitement (1) de matières contaminées comprenant une cuve de mélange (8) installée verticalement ou de façon inclinée, qui présente une paroi périphérique (10) et un fond de récipient (11) et est chargée d'en haut avec les matières à traiter et présente une ouverture de sortie de matière (12) dans son fond de récipient (11), comprenant un dispositif agitateur (21) qui est installé dans la cuve de mélange (8), et
comprenant un dispositif d'entraînement d'agitation (27) destiné à entraîner en rotation le dispositif agitateur (21),
**caractérisé par le fait qu'**il comporte un châssis (3) qui présente un cadre de base (6) à orientation sensiblement horizontale,
comprenant un espace libre (46) entre le cadre de base (6) et l'ouverture de sortie de matière (12), afin de permettre la prise en charge des matières traitées, au-dessus du cadre de base (6),
le dispositif agitateur (21) étant tenu sur le cadre de base (6).

3. Dispositif de traitement (1) de matières contaminées, comprenant une cuve de mélange (8) installée verticalement ou de façon inclinée, qui présente une paroi périphérique (10) et un fond de récipient (11) et est chargée d'en haut avec les matières à traiter et présente une ouverture de sortie de matière (12) dans son fond de récipient (11), comprenant un dispositif agitateur (21) qui est installé dans la cuve de mélange (8), et
comprenant un dispositif d'entraînement d'agitation (27) destiné à entraîner en rotation le dispositif agitateur (21),
**caractérisé par le fait qu'**il comporte un châssis (3) qui présente un cadre de base (6) à orientation sensiblement horizontale, comprenant un cadre auxiliaire (45) qui est disposé sur le cadre de base (6) et est relié de façon démontable à celui-ci et peut être installé en cas de besoin sur un bâti (49), pouvant être installé de façon stationnaire, ou directement sur un sol (38) stable,
le dispositif agitateur (21) étant tenu sur le cadre auxiliaire (45).

4. Dispositif de traitement selon la revendication 1, 2 ou 3, **caractérisé par le fait que** la cuve de mélange (8) est montée avec possibilité de rotation autour d'un axe perpendiculaire ou vertical et est entraînée par un dispositif d'entraînement de cuve (16).

5. Dispositif de traitement selon la revendication 1, 2 ou 3, **caractérisé par le fait que** le châssis (3) fait partie d'une remorque d'un véhicule.

6. Dispositif de traitement selon la revendication 1, 2 ou 3, **caractérisé par le fait que** la remorque de véhicule est un semi-remorque ou un véhicule sur rails.

7. Dispositif de traitement selon la revendication 1, 2 ou 3, **caractérisé par le fait que** le châssis (3) porte un conteneur poste de commande (28) qui est de préférence en même temps un conteneur bureau.

8. Dispositif de traitement selon la revendication 1, 2 ou 3, **caractérisé par le fait que** le châssis (3) porte un dispositif de stockage d'additifs (29), muni de préférence d'un moyen de dosage.

9. Dispositif de traitement selon la revendication 1, 2 ou 3, **caractérisé par le fait que** le dispositif de mélange présente une cuve de mélange (8) qui est montée de manière à pouvoir tourner autour d'un axe de rotation (9), vertical ou incliné par rapport à la verticale, et est entraînée en rotation par le dispositif d'entraînement de cuve (16).

10. Dispositif de traitement selon la revendication 9, **caractérisé par le fait que** l'axe de rotation (9) de la cuve de mélange (8) et l'axe de rotation (22) du dispositif agitateur (21) sont parallèles l'un à l'autre.

11. Dispositif de traitement selon la revendication 9, **caractérisé par le fait que** le dispositif d'entraînement d'agitation (27) et le dispositif d'entraînement de cuve (16) peuvent être commandés indépendamment l'un de l'autre.

12. Dispositif de traitement selon la revendication 9, **caractérisé par le fait que** le dispositif d'entraînement d'agitation (27) et le dispositif d'entraînement de cuve (16) sont entraînés en rotation dans le même sens.

13. Dispositif de traitement selon la revendication 9, **caractérisé par le fait que** le dispositif d'entraînement d'agitation (27) et le dispositif d'entraînement de cuve (16) sont entraînés en rotation dans des sens opposés.

14. Dispositif de traitement selon la revendication 9, **caractérisé par le fait que** le dispositif d'entraînement d'agitation (27) est entraîné à une vitesse de rotation sensiblement plus élevée que le dispositif d'entraînement de cuve (16).

15. Dispositif de traitement selon la revendication 9, **caractérisé par le fait que** les vitesses de rotation de la cuve de mélange (8) et du dispositif d'agitation (21) peuvent être modulées pendant le fonctionnement, selon un programme prédéterminé.

16. Dispositif de traitement selon la revendication 1, 2 ou 3, **caractérisé par le fait que** le poids de la charge de la cuve de mélange (8) est mesuré à l'aide de capteurs de pesée.

17. Dispositif de traitement selon la revendication 1, 2 ou 3, **caractérisé par le fait qu'**un conduit de sortie par gravité (15) se raccorde à l'ouverture de sortie de matière (12).

18. Dispositif de traitement selon la revendication 17, **caractérisé par le fait que** le conduit de sortie par gravité (15) s'étend à travers l'ouverture de passage de matière (14).

19. Dispositif de traitement selon la revendication 1 ou 2, **caractérisé par le fait que** le châssis (3) est pourvu d'un moyen de levage (42, 43).

20. Dispositif de traitement selon la revendication 19, **caractérisé par le fait que** le moyen de levage (42, 43) agit entre le cadre de base (6) et le sol, aux fins de soulever le cadre (6) par rapport au sol (3 8) et de créer un espace libre pour un dispositif de transport de matière (37).

21. Dispositif de traitement selon la revendication 2, **caractérisé par le fait qu'**un moyen de levage (42, 43) est installé entre la cuve de mélange (8) et le cadre de base (6), afin d'augmenter au besoin l'espace libre (46).

22. Dispositif de traitement selon la revendication 1, 2 ou 3, **caractérisé par le fait que** le dispositif de traitement est alimenté avec des matières qui sont obtenues sur place par un concasseur.
